# EUROPÄISCHE PATENTSCHRIFT

(11) **EP 1 378 680 B1**
(45) Veröffentlichungstag und Bekanntmachung des Hinweises auf die Patenterteilung: **21.06.2006**
(21) Anmeldenummer: 03008192.1
(22) Anmeldetag: 08.04.2003
(51) Int. Cl.: F16F 9/36, F16F 9/32

(54) **Vorrichtung zum Dämpfen von Stössen, vorzugsweise der Stösse von Möbeltüren oder Schubladen**
Shock absorbing device, especially for cabinet doors or drawers
Dispositif amortisseur de chocs, en particulier pour portes de meubles et tiroirs

(30) Priorität: 03.07.2002 DE 20210295 U
(43) Veröffentlichungstag der Anmeldung: 07.01.2004
(73) Patentinhaber: Arturo Salice S.p.A., I-22060 Novedrate (Como) (IT)
(72) Erfinder:
(74) Vertreter: Gossel, Hans K.

(56) Entgegenhaltungen:
- DE-U- 20 010 282
- US-A- 4 030 715
- US-A- 5 927 448
- US-A- 6 006 873

## Beschreibung

Die Erfindung betrifft eine Vorrichtung zum Dämpfen von Stößen, vorzugsweise der Stöße von Möbeltüren oder Schubladen, bestehend aus einem Zylinder mit einem Kolben, dessen aus einer Zylinderseite dichtend herausgeführte Kolbenstange einen die Stöße aufnehmenden Stössel bildet, der den mit einer Flüssigkeit gefüllten Zylinderraum in zwei Kammern unterteilt und Durchbrüche aufweist und/oder mit der Zylinderwand einen Durchtrittsspalt oder einen Durchtrittskanal begrenzt, aus einer im Bereich des Austrittsendes des Zylinders angeordneten, die Kolbenstange führenden Führungsbuchse, die einen mittleren Schaftteil verringerten Durchmessers, der von einem rohrabschnittförmigen Teil aus einem komprimierbaren elastischen Material eingefaßt ist, und einen verbreiterten Endteil aufweist, aus einer zwischen dem Kolben und dem Zylinderboden eingespannten Druckfeder und aus einem den Zylinder schließenden Deckel mit einer axialen Durchgangsbohrung für die Kolbenstange.

Eine derartige Dämpfungsvorrichtung ist aus der U.S. 6 006 873 sowie auch aus der DE 200 10 282 U bekannt. Die bekannte Dämpfungseinrichtung gemäß der DE 200 10 282 U vermag bei ruhigem Lauf störende Geräusche, die durch in der Dämpfungsflüssigkeit vorhandene Luftblasen entstehen können, dadurch zu vermeiden oder mindestens zu vermindern, daß eventuell vorhandene Luftblasen in den durch den mittleren Schaftteil verringerten Durchmessers der Führungsbuchse gebildeten Ringraum eintreten und dort von dem rohrabschnittförmigen Teil aufgenommen oder neutralisiert werden können, der gleichsam eine Speicherhülse bildet. Obwohl sich die bekannte Dämpfungsvorrichtung hervorragend bewährt hat, besteht sie noch immer aus vielen Einzelteilen, so daß es Aufgabe der Erfindung ist, die bekannte Dämpfungsvorrichtung in ihrem Aufbau zu vereinfachen.

Erfindungsgemäß wird diese Aufgabe dadurch gelöst, daß die Führungsbuchse und der Deckel aus einem einstückigen Teil bestehen, das ausgangseitig mit einem verbreiterten Bohrungsabschnitt versehen ist, in dem ein auf die Kolbenstange aufgesetztes zylindrisches Teil geführt ist. Sollte aus dem die Kolbenstange in der Führungsbuchse umgebenen Spalt nach außen hin Dämpfungsflüssigkeit austreten, würde sich diese im unteren Bereich des verbreiterten Bohrungsabschnitts sammeln, so dass der in diesem Abschnitt geführte zylindrische Teil, der kolbenähnlich ausgebildet ist, ein Austreten aus dem Bohrungsschnitt wirksam verhindern würde. Somit ist nicht nur ein vereinfachter, sondern auch ein weniger störanfälliger Aufbau verwirklicht.

Darüber hinaus verringert die einstückige Ausbildung von Deckel und Führungsbuchse nicht nur die Anzahl der Einzelteile, sondern vereinfacht insbesondere auch die Montage, da sich der Zylinder nur durch Einsetzen der Führungsbuchse mit Deckel verschließen und kompettieren läßt, ohne daß besondere Einrichtungen zur Halterung der Führungsbuchse zwischen einem separaten Deckel und dem Zylinder vorgesehen werden müßten.

Zweckmäßigerweise besteht die einstückig mit dem Deckel verbundene Führungsbuchse aus einem Spritzgußteil aus Kunststoff.

In den Ringraum, der durch den mittleren Schaftteil der Führungsbuchse verringerten Durchmessers gebildet ist, ist der komprimierbare rohrabschnittförmige Teil eingesetzt, der beispielsweise aus Zell- oder Schaumgummi oder aus geschäumten elastomerem Kunststoff bestehen kann.

Zweckmäßigerweise ist der verbreiterte Endteil der Führungsbuchse endseitig mit einem verbreiterten Bohrungsabschnitt versehen, in den eine die Kolbenstange abdichtende Lippendichtung eingesetzt ist.

Zweckmäßigerweise trägt das zylindrische Teil an seinem oberen Ende eine Kappe aus weichem und/oder elastischem Material, das schonend und geräuscharm Stöße aufnimmt.

Der Deckelabschnitt kann über den Zylinder hinaus verlängert sein. Dieser verlängerte Teil kann mit Einrichtungen zu seiner Halterung an Möbelteilen o. dgl. versehen sein, z.B. mit einer Ringnut.

Nach einer erfinderischen Weiterbildung ist vorgesehen, daß der Zylinder im Bereich der eingefahrenen Stellung des Kolbens einen Bereich aufweist, in dem die Dämpfungsflüssigkeit frei oder nahezu frei von der unteren Kammer in die obere Kammer strömen kann. Diese Möglichkeit des Überströmens der Dämpfungsflüssigkeit vermindert oder vernichtet nahezu die Dämpfungswirkung kurz vor Erreichen der eingefahrenen Stellung, so daß beispielsweise für den Fall, daß der Dämpfer mit einer Schließvorrichtung, beispielsweise für eine Tür oder Klappe, zusammenarbeitet, die Schließkraft im Bereich der geschlossenen bzw. eingefahrenen Stellung des zu dämpfenden Möbelteils nicht beeinflußt wird.

In dem die Dämpfungswirkung aufhebenden Bereich kann der Durchmesser des Zylinders konisch oder über eine Stufe vergrößert sein. In diesem Bereich kann die Zylinderwand auch mit Nuten versehen sein, deren axiale Länge oder Erstreckung größer ist als die Dicke des Kolbens.

Ein Ausführungsbeispiel der Erfindung wird nachstehend anhand der Zeichnung näher erläutert. In dieser zeigt
- Fig. 1: Einen Längsschnitt durch eine erste Ausführungsform der erfindungsgemäßen Dämpfungsvorrichtung, in den sich der Kolben in seiner oberen Endstellung befindet,
- Fig. 2: eine der Fig. 1 entsprechende Darstellung, in der sich der Kolben in seiner unteren Endstellung befindet,
- Fig. 3: einen Längsschnitt durch das auf die Kolbenstange aufgesetzte zylindrische Teil,
- Fig. 4: einen Längsschnitt durch die in eine Ausnehmung des zylindrischen Teils nach Fig. 3 eingesetzte Kappe,
- Fig. 5: einen Längsschnitt durch die einstückig mit dem Deckel ausgeführte Führungsbuchse,
- Fig. 6: einen Schnitt durch die in eine Ausnehmung des verbreiterten unteren Endes der Führungsbuchse eingesetzte Dichtung,
- Fig. 7: einen Längsschnitt durch das rohrabschnittförmige Teil aus porösem und elastischem Material,
- Fig. 8: einen Längsschnitt durch den Zylinder,
- Fig. 9 und 10: in Fig. 1 und 2 entsprechende Längsschnitte durch eine zweite Ausführungsform der Dämpfungsvorrichtung und
- Fig. 11: einen Längsschnitt durch den Zylinder der Dämpfungsvorrichtung nach den Fig. 9 und 10.

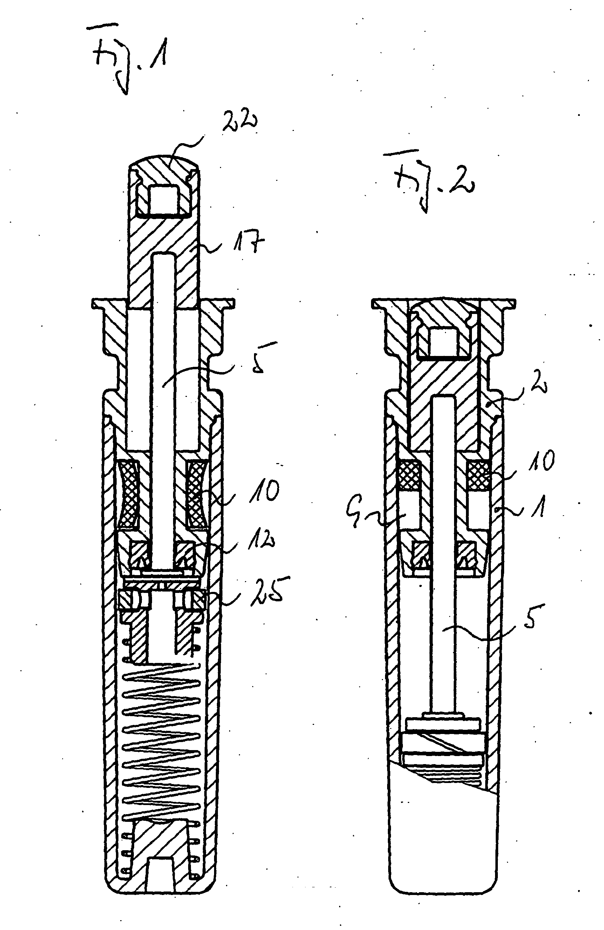

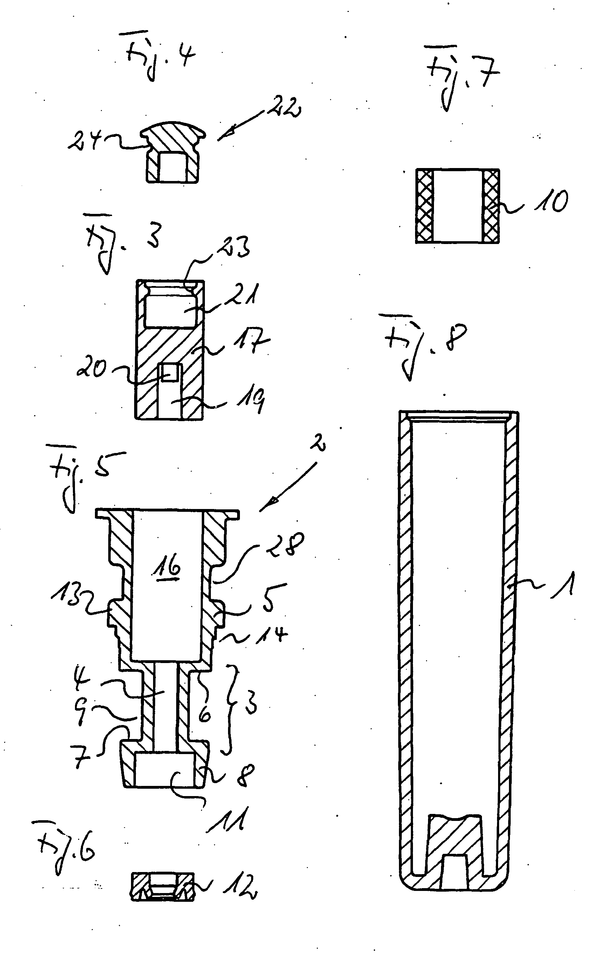

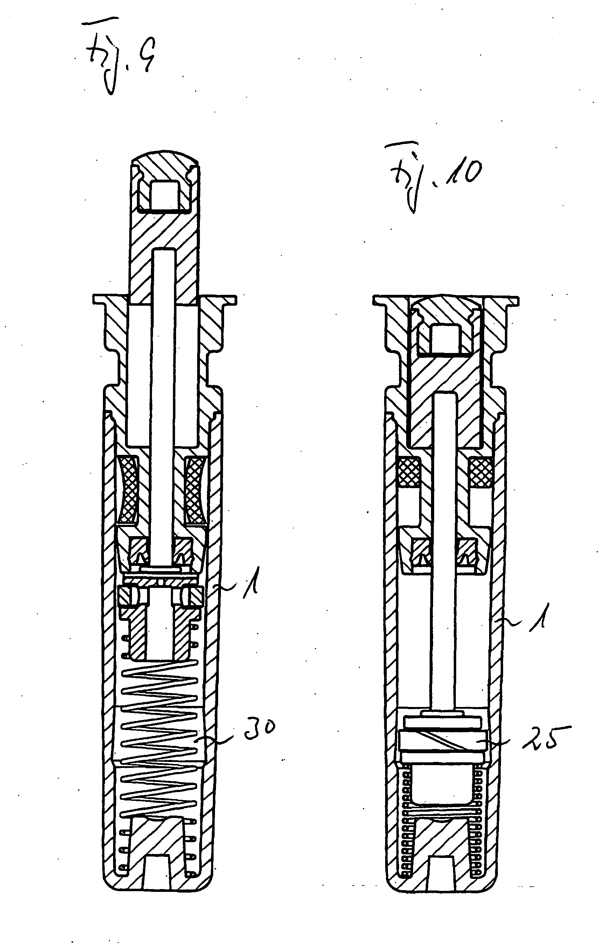

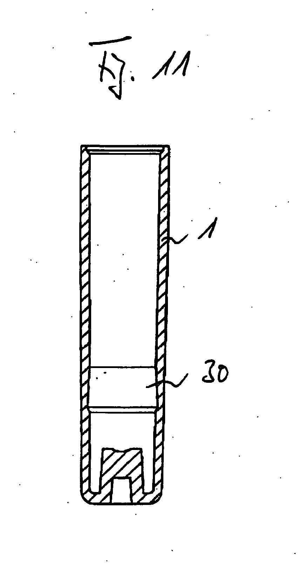

Die aus Fig. 1 bis 8 ersichtliche Dämpfungsvorrichtung entspricht der in dem DE-GM 200 10 282.6 anhand der Fig. 11 bis 14 beschriebenen zweiten Ausführungsform einer Dämpfungsvorrichtung bis auf den Unterschied, daß bei der Dämpfungsvorrichtung nach dem DE-GM die Führungsbuchse und der den Zylinder schließende Deckel zwei Einzelteile sind, die es bedingen, daß die Buchse zwischen einer abgeschrägten Ringstufe des Zylinders und einer in einer Ausnehmung des Deckels vorgesehenen Ringstufe festgelegt ist, während nach der vorliegenden Erfindung die Führungsbuchse und der Deckel aus einem einstückigen Teil, vorzugsweise aus einem einstückigen Spritzgußteil aus Kunststoff bestehen. Wegen der Beschreibung des Zylinders und der unterhalb der Kolbenstange befindlichen Teile, die sich mit einer an ihrem unteren Ende befindliche flanschförmige Verbreiterung auf dem Kolben abstützt, wird daher auf die Beschreibung der Ausführungsform nach den Fig. 11 bis 14 des DE-GM 200 10 282.6 Bezug genommen.

In den Zylinder 1 ist das Teil 2 eingesetzt, das den den Zylinder schließenden Dekkel bildet und mit einem unteren buchsenförmigen Abschnitt 3 mit zentraler Bohrung 4 versehen ist, die der Führung der Kolbenstange 5 dient. Der buchsenförmige Abschnitt 3 ist von dem den Deckel bildenden Abschnitt 5 durch eine Ringstufe 6 getrennt. Der untere Endbereich des buchsenförmigen Abschnitts 3 ist über eine Ringstufe 7 mit einem verbreiterten Abschnitt 8 versehen. Zwischen den Ringstufen 6 und 7 ist der Schaftteil des buchsenförmigen Abschnitts zur Bildung eines Ringraums 9 in seinem Durchmesser verjüngt. In diesen Ringraum 9 ist das rohrabschnittförmige Teil 10 aus Zell- oder Schaumgummi oder aus einem geschäumten elastomeren Kunststoff eingesetzt. Der untere verbreiterte Abschnitt 8 des buchsenförmigen Abschnitts ist angrenzend an die Bohrung 4 über eine Ringstufe mit einem in ihrem Durchmesser verbreiterten Bohrungsabschnitt 11 versehen, in den die Lippendichtung 12 eingesetzt ist. Der deckelförmige Teil 5 ist mit einem Abschnitt 13 versehen, dessen Durchmesser dem Durchmesser des Zylinders 1 entspricht. Angrenzend an den Abschnitt 13 ist das deckelförmige Teil mit dessen Durchmesser verringernden Ringstufen 14 versehen, die in komplementäre Bohrungsteile am oberen Rand des Zylinders 1 greifen.

Im dargestellten Ausführungsbeispiel besteht der Deckel mit dem buchsenförmigen Abschnitt und der Zylinder aus Kunststoff, so daß der Deckel mit dem Zylinder beispielsweise durch eine Ultraschallschweißung verbunden werden kann. Der Dekkelabschnitt 5 selbst ist mit einer zylindrischen Sacklochbohrung 16 versehen, die über eine Ringstufe in die Bohrung 4 des buchsenförmigen Abschnitts 3 übergeht. Auf das obere Ende der Kolbenstange 5 ist ein zylindrisches Teil 17 aufgesetzt, das in seinem Durchmesser mit geeignetem Spiel der zylindrischen Sacklochbohrung 16 angepaßt ist, so daß es nahezu reibungslos in dieser geführt ist, dennoch aber ein Austreten von einer in die Sacklochbohrung 16 eintretenden Dämpfungsflüssigkeit verhindert. Das zylindrische Teil 17 ist mit einer das Ende der Kolbenstange 5 einfassenden Bohrung 19 versehen. In ihrem Grund weist die Bohrung 19 einen Zapfen 20 auf, der in eine stirnseitige Bohrung der Kolbenstange 5 greift.

An ihrem oberen Ende ist das zylindrische Teil 17 mit einer Ausnehmung 21 versehen, in die die Kappe 22 eingesetzt ist. Zur Halterung der Kappe 22 weist die Ausnehmung 21 einen ringförmigen Vorsprung 23 auf, der in eine Ringnut 24 der Kappe 22 greift.

Von dem Kolben 25 verdrängte Dämpfungsflüssigkeit kann den verbreiterten Abschnitt 8 des buchsenförmigen Abschnitts überströmen, so daß die Dämpfungsflüssigkeit in den Ringraum 9 eintreten kann und in diesem das rohrabschnittförmige Teil 10 in der aus Fig. 2 ersichtlichen Weise komprimiert. Um ein Überströmen von Dämpfungsflüssigkeit zu ermöglichen, kann der verbreiterte Abschnitt 8 des buchsenförmigen Abschnitts gegenüber der Zylinderwandung mit einem Ringspalt oder Freischnitten versehen sein.

Der deckelförmige Teil 5 ist zweckmäßigerweise mit Einrichtungen zur Befestigung an einem Möbelteil o. dgl. versehen. Im dargestellten Ausführungsbeispiel weist der buchsenförmige Abschnitt 5 eine Ringnut 28 auf, die der Befestigung dient.

Das Ausführungsbeispiel nach den Fig. 9 bis 11 unterscheidet sich von dem nach den Fig. 1 bis 8 dadurch, daß der Zylinder 1 in seinem unteren Bereich mit einem Abschnitt 30 versehen ist, in den der Kolben 25 am Ende seiner Dämpfungsbewegung einfährt und der sich nach unten hin konusförmig erweitert. Diese konusförmige Erweiterung führt dazu, daß die Dämpfungsflüssigkeit nahezu ungedrosselt von der unteren Zylinderkammer in die obere Zylinderkammer überströmen kann, so daß die Dämpfungswirkung vermindert oder nahezu aufgehoben ist, sobald der Kolben 35 in den konusförmigen Bereich 30 einfährt.

## Patentansprüche

1. Vorrichtung zum Dämpfen von Stößen, vorzugsweise der Stöße von Möbeltüren oder Schubladen oder anderer beweglicher Möbelteile, bestehend
aus einem Zylinder (1) mit einem Kolben (25), dessen aus einer Zylinderseite dichtend herausgeführte Kolbenstange (5) einen die Stöße aufnehmenden Stössel bildet, der den mit einer Flüssigkeit gefüllten Zylinderraum in zwei Kammern unterteilt und Durchbrüche aufweist und/oder mit der Zylinderwand einen Durchtrittsspalt oder einen Durchtrittskanal begrenzt,
aus einer im Bereich des Austrittsendes des Zylinders (1) angeordneten, die Kolbenstange (5) führenden Buchse, die einen mittleren Schaftteil verringerten Durchmessers, der von einem rohrabschnittförmigen Teil (10) aus einem komprimierbaren, elastischen Material eingefaßt ist, und einen verbreiterten Endteil (8) aufweist,
aus einer zwischen dem Kolben (25) und dem Zylinderboden eingespannten Druckfeder und
aus einem den Zylinder schließenden Deckel mit einer axialen Durchgangsbohrung für die Kolbenstange,
wobei die Führungsbuchse und der Deckel aus einem einstückigen Teil (2) bestehen.
**dadurch gekennzeichnet,**
**daß** der Deckelabschnitt (5) ausgangsseitig mit einem verbreiterten Bohrungsabschnitt (16) versehen ist, in dem ein auf die Kolbenstange (5) aufgesetztes zylindrisches Teil (17) geführt ist.

2. Vorrichtung nach Anspruch 1, **dadurch gekennzeichnet, daß** die Führungsbuchse mit Deckel aus einem Spritzgußteil (2) aus Kunststoff bestehen.

3. Vorrichtung nach Anspruch 1 oder 2, **dadurch gekennzeichnet, daß** der verbreiterte Endteil (8) der Führungsbuchse endseitig mit einem verbreiterten Bohrungsabschnitt (11) versehen ist, in den eine die Kolbenstange (5) abdichtende Lippendichtung (12) eingesetzt ist.

4. Vorrichtung nach einem der Ansprüche 1 bis 3, **dadurch gekennzeichnet, daß** das zylindrische Teil (17) an seinem oberen Ende eine Kappe (22) aus weichem und/oder elastischem Material trägt.

5. Vorrichtung nach einem der Ansprüche 1 bis 4, **dadurch gekennzeichnet, daß** der Deckelabschnitt (5) über den Zylinder (1) hinaus verlängert ist.

6. Vorrichtung nach einem der Ansprüche 1 bis 5, **dadurch gekennzeichnet, daß** der verlängerte Teil (5) mit Einrichtungen zu seiner Halterung, z.B. mit einer Ringnut (28), versehen ist.

7. Vorrichtung nach einem der Ansprüche 1 bis 6, **dadurch gekennzeichnet, daß** der Zylinder (1) im Bereich der eingefahrenen Stellung des Kolbens (25) einen Bereich (30) aufweist, in dem die Dämpfungsflüssigkeit frei oder nahezu frei von der unteren Zylinderkammer in die obere Zylinderkammer strömen kann.

8. Vorrichtung nach Anspruch 7, **dadurch gekennzeichnet, daß** in dem Überströmbereich der Durchmesser des Zylinders konisch (30) oder über eine Stufe vergrößert ist.

9. Vorrichtung nach Anspruch 7, **dadurch gekennzeichnet, daß** in dem Überströmbereich die Zylinderwand mit Nuten versehen ist, deren axiale Länge oder Erstreckung größer ist als die Dicke des Kolbens.

## Claims

1. Shock-absorbing device, preferably for absorbing the shocks of furniture doors or drawers or other moving furniture parts; consisting of
a cylinder (1) with a piston (25) whose piston rod (5), which is sealably guided out of one side of the cylinder, forms a plunger which takes up the shocks and which subdivides the liquid-filled cylinder space into two chambers and has apertures and/or delimits a through gap or a through channel with the cylinder wall,
a bush which is arranged in the region of the outlet end of the cylinder (1) and guides the piston rod (5), the bush having a central shaft part of reduced diameter, which is enclosed by a part (10) in the form of a tubular section made of a compressible elastic material, and a widened end part (8),
a compression spring clamped between the piston (25) and the cylinder bottom, and
a cover which closes the cylinder and has an axial through bore for the piston rod,
the guide bush and the cover consisting of a one-piece part (2),
**characterized in that**
the cover section (5) is provided at the outlet side with a widened bore section (16) in which a cylindrical part (17) fitted onto the piston rod (5) is guided.

2. Device according to Claim 1, **characterized in that** the guide bush and cover consist of an injection-moulded plastic part (2).

3. Device according to Claim 1 or 2, **characterized in that** the widened end part (8) of the guide bush is provided at its end with a widened bore section (11) into which is inserted a lip seal (12) which seals the piston rod (5).

4. Device according to one of Claims 1 to 3, **characterized in that** the cylindrical part (17) bears at its upper end a cap (22) made of soft and/or elastic material.

5. Device according to one of Claims 1 to 4, **characterized in that** the cover section (5) is prolonged beyond the cylinder (1).

6. Device according to one of Claims 1 to 5, **characterized in that** the prolonged part (5) is provided with means for the retention thereof, for example with an annular groove (28).

7. Device according to one of Claims 1 to 6, **characterized in that**, in the region of the piston (25) when it is in the retracted postion, the cylinder (1) has a region (30) in which the shock-absorbing liquid can flow freely or virtually freely into the upper cylinder chamber from the lower cylinder chamber.

8. Device according to Claim 7, **characterized in that** the diameter of the cylinder is enlarged conically (30) or via a step in the overflow region.

9. Device according to Claim 7, **characterized in that** the cylinder wall is provided with grooves in the overflow region, the axial length or extent of which grooves is greater than the thickness of the piston.

## Revendications

1. Dispositif amortisseur de chocs, de préférence des chocs de portes de meubles ou de tiroirs ou d'autres parties de meubles mobiles, se composant
d'un cylindre (1) avec un piston (25), dont une tige de piston (5) sortant hermétiquement d'un côté du cylindre forme une tige-poussoir recevant les chocs, qui divise l'espace du cylindre rempli d'un liquide en deux chambre et qui présente des orifices et/ou qui limite avec la paroi du cylindre une fente de passage ou un conduit de passage,
d'une douille disposée dans la région de l'extrémité de sortie du cylindre (1) et guidant la tige de piston (5), qui présente une partie de tige centrale de diamètre réduit qui est enserrée par une partie (10) en forme de segment tubulaire en un matériau comprimable élastique, et une partie d'extrémité élargie (8),
d'un ressort de pression tendu entre le piston (25) et le fond du cylindre, et
d'un couvercle fermant le cylindre avec un alésage de passage axial pour la tige de piston,
la douille de guidage et le couvercle se composant d'une pièce unique (2),
**caractérisé en ce que**
la portion de couvercle (5) est pourvue du côté de la sortie d'une portion d'alésage élargie (16) dans laquelle est guidée une partie cylindrique (17) placée sur la tige de piston (5).

2. Dispositif selon la revendication 1, **caractérisé en ce que** la douille de guidage avec le couvercle se compose d'une pièce moulée par injection (2) en plastique.

3. Dispositif selon la revendication 1 ou 2, **caractérisé en ce que** la partie d'extrémité élargie (8) de la douille de guidage est pourvue du côté de l'extrémité d'une portion d'alésage élargie (11) dans laquelle est inséré un joint d'étanchéité à lèvre (12) étanchéifiant la tige de piston (5).

4. Dispositif selon l'une quelconque des revendications 1 à 3, **caractérisé en ce que** la partie cylindrique (17) porte sur son extrémité supérieure un capuchon (22) en matériau souple et/ou élastique.

5. Dispositif selon l'une quelconque des revendications 1 à 4, **caractérisé en ce que** la portion de couvercle (5) est prolongée au-delà du cylindre (1).

6. Dispositif selon l'une quelconque des revendications 1 à 5, **caractérisé en ce que** la partie prolongée (5) est pourvue de dispositifs pour sa fixation, par exemple d'une rainure annulaire (28).

7. Dispositif selon l'une quelconque des revendications 1 à 6, **caractérisé en ce que** le cylindre (1) présente dans la région de la position rentrée du piston (25) une région (30) dans laquelle le fluide d'amortissement peut s'écouler librement ou pratiquement librement de la chambre de cylindre inférieure dans la chambre de cylindre supérieure.

8. Dispositif selon la revendication 7, **caractérisé en ce que** dans la région de transfert, le diamètre du cylindre est augmenté sous forme conique (30) ou par le biais d'un gradin.

9. Dispositif selon la revendication 7, **caractérisé en ce que** dans la région de transfert, la paroi du cylindre est pourvue de rainures dont la longueur axiale ou l'étendue axiale est supérieure à l'épaisseur du piston.
